(19) Europäisches Patentamt
European Patent Office
Office européen des brevets

(11) **EP 4 455 942 A1**

(12) **EUROPEAN PATENT APPLICATION**
published in accordance with Art. 153(4) EPC

(43) Date of publication:
**30.10.2024 Bulletin 2024/44**

(21) Application number: **22910916.0**

(22) Date of filing: **08.12.2022**

(51) International Patent Classification (IPC):
**G06N 3/0495** (2023.01)    **G06N 3/0464** (2023.01)

(52) Cooperative Patent Classification (CPC):
**G06N 3/0464; G06N 3/0495**

(86) International application number:
**PCT/JP2022/045231**

(87) International publication number:
**WO 2023/120205 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 JP 2021211228**

(71) Applicant: **Sony Semiconductor Solutions Corporation**
**Atsugi-shi, Kanagawa 243-0014 (JP)**

(72) Inventors:
• **GOTO, Shoichi**
**Atsugi-shi, Kanagawa 243-0014 (JP)**
• **YAMAKAWA, Kenji**
**Atsugi-shi, Kanagawa 243-0014 (JP)**
• **EKI, Ryoji**
**Atsugi-shi, Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFERENCE DEVICE, INFERENCE METHOD, AND INFERENCE PROGRAM**

(57) An inference device (100) includes: an acquisition unit (131) that acquires a weight value in a neural network in which the weight value is stored in logarithm; a conversion unit (132) that converts the weight value acquired by the acquisition unit into an integer; and an inference unit (133) that performs inference regarding input data input to the neural network by arithmetic processing using the integer obtained by the conversion performed by the conversion unit.

FIG.1

EP 4 455 942 A1

**Description**

Field

The present disclosure relates to an inference device, an inference method, and a computer-readable storage medium. Specifically, the present disclosure relates to inference processing in a neural network.

Background

Deep learning is actively used in various fields of information processing. For example, in an image processing field, models are aggressively learned based on convolutional neural networks (CNNs), and the learned models are aggressively used.

An enormous amount of data is handled in learning of a deep neural network (DNN) including a CNN and inference processing. Many techniques for improving processing speed have thus been studied. For example, there have been proposed techniques in which piecewise linear approximation is used in an arithmetic operation of the DNN and a logical shift operation is used instead of a multiplication operation (e.g., Patent Literatures 1 and 2). Furthermore, there has been proposed a technique of devising an arithmetic method in each layer of the DNN by converting data (e.g., Patent Literatures 3 and 4).

Citation List

Patent Literature

Patent Literature 1: JP 2020-4398 A
Patent Literature 2: JP 2019-164793 A
Patent Literature 3: JP 2019/168084 A1
Patent Literature 4: JP 2019/168088 A1

Summary

Technical Problem

Incidentally, there have been an increasing number of examples in which processing using a DNN is performed not by a server device having relatively sufficient arithmetic capability and hardware resources (e.g., memory capacity) but on an edge side (e.g., smartphone and smart camera).

An increase in a data amount such as an arithmetic amount and a weight value to be handled in the DNN requires an accumulation memory having a large capacity and frequent access from the accumulation memory to an arithmetic unit for an arithmetic operation. This may increase both transfer time and calculation time, and deteriorate calculation efficiency. In this case, execution of AI processing on the edge side may be difficult.

Therefore, the present disclosure proposes an inference device, an inference method, and a computer-readable storage medium capable of reducing an amount of data to be handled without deteriorating accuracy in an arithmetic operation of a neural network. Solution to Problem

An inference device according to one embodiment of the present disclosure includes an acquisition unit that acquires a weight value in a neural network in which the weight value is stored in logarithm, a conversion unit that converts the weight value acquired by the acquisition unit into an integer, and an inference unit that performs inference regarding input data input to the neural network by arithmetic processing using the integer obtained by the conversion performed by the conversion unit.

Brief Description of Drawings

FIG. 1 outlines information processing performed by an inference system according to an embodiment.
FIG. 2 is a reference diagram illustrating a structure of a CNN model.
FIG. 3 is a reference diagram (1) illustrating arithmetic processing of the CNN model.
FIG. 4 is a reference diagram (2) illustrating the arithmetic processing of the CNN model.

FIG. 5 illustrates weight quantization in a model according to the embodiment.
FIG. 6 is a reference diagram illustrating distribution of weight values in the CNN model.
FIG. 7 illustrates a logarithmic representation of a weight value in the CNN model.
FIG. 8 is a flowchart illustrating a procedure of inference processing according to the embodiment.
FIG. 9 is a flowchart illustrating the inference processing according to the embodiment in a time series.
FIG. 10 illustrates a configuration example of an inference device according to the embodiment.
FIG. 11 illustrates an example of an arithmetic circuit configuration according to the embodiment.
FIG. 12 illustrates a configuration example of an inference device according to a variation.
FIG. 13 is a hardware configuration diagram illustrating one example of a computer that implements a function of an inference device.

Description of Embodiments

An embodiment will be described in detail below with reference to the drawings. Note that, in the following embodiment, the same reference signs are attached to the same parts to omit duplicate description.
The present disclosure will be described in the following item order.

1. Embodiment

1-1. Outline of Inference Processing According to Embodiment
1-2. Procedure of Inference Processing According to Embodiment
1-3. Configuration of Inference Device According to Embodiment
1-4. Configuration Example of Arithmetic Circuit According to Embodiment
1-5. Configuration of Inference Device According to Variation

2. Other Embodiments

3. Effects of Inference Device According to Present Disclosure
4. Hardware Configuration

(1. Embodiment)

(1-1. Outline of Inference Processing According to Embodiment)

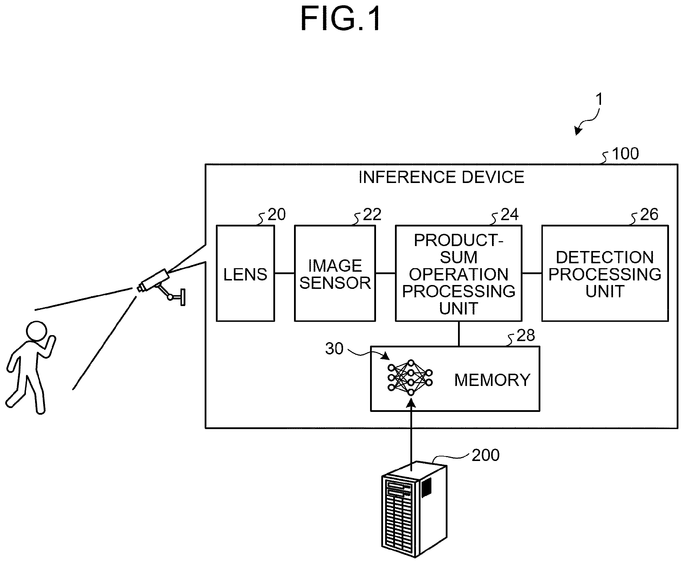

One example of inference processing according to the embodiment of the present disclosure will be described with reference to FIG. 1. FIG. 1 outlines inference processing performed by an inference system 1 according to the embodiment. As illustrated in FIG. 1, the inference system 1 includes an inference device 100 and a learning server 200 according to the embodiment.
The inference device 100 is an information processing device having an imaging function, and includes, for example, a digital camera and a digital video camera installed at a specific place. The inference device 100 includes a micro controller unit (MCU) or a micro processor unit (MPU), and also includes an image sensor such as a CMOS image sensor (CIS). The inference device 100 performs a series of information processing such as image capturing, image storage, and image transmission/reception. Furthermore, the inference device 100 includes a network model (hereinafter, simply referred to as "model") preliminarily learned for inferring a predetermined task. In an example of FIG. 1, the inference device 100 has a model having a convolutional neural network (CNN) structure. The inference device 100 executes, by using the model, inference processing by so-called AI, for example. The inference processing includes determining whether or not a captured image contains a predetermined target. That is, the inference device 100 functions as terminal equipment (edge) in the inference system 1.
The learning server 200 is an information processing server that generates a model by preliminary learning. For example, the learning server 200 transmits the generated model to the inference device 100 via a communication network.
Note that each device in FIG. 1 conceptually indicates a function of the inference system 1, and can have various modes depending on embodiments. For example, the inference device 100 may include two or more devices having different functions, such as an imager (camera) that specializes in performing imaging and an information processing terminal including a personal computer (PC). Furthermore, the inference system 1 may include devices in number not illustrated.

As described above, the inference device 100 has a model preliminarily learned for recognizing a predetermined target. For example, the inference device 100 always continues imaging and detection within a viewing angle. When recognizing a predetermined target (e.g., human and specific part (face) of human, hereinafter, collectively referred to as "object"), the inference device 100 performs imaging. The inference device 100 can thereby store an image. Alternatively, the inference device 100 can also extract only an image containing an object by performing imaging at regular time intervals, randomly storing images, and then performing image recognition by using a model.

Such an object recognition model is usually preliminarily learned before the inference device 100 is installed. In the example of the present disclosure, the model is learned by the learning server 200. The inference device 100 can perform inference processing using the model by acquiring the model learned by the learning server 200 and storing the model in a storage unit (memory 28 in example of FIG. 1) .

A device having excellent processing capability such as a cloud server can perform arithmetic processing using the model. Performing processing on the edge side, however, eliminates the need for uploading input data such as a video to a network to alleviate a network load, reduces a processing load on a cloud server, and enables detection and the like on the edge side to enable real-time detection processing. Processing on the edge side is more demanded due to these advantages.

From such a situation, the inference device 100 performs processing using a learned model as an edge. The following problem exists on this point. That is, assuming that the edge is generally smaller than a server device and the like and a plurality of edges is installed, it is desirable to enable a reduction in size and power saving and inhibit costs by inhibiting an amount of memory to be loaded and adopting relatively inexpensive capability and circuit configuration of a CPU or a GPU. For example, however, in a convolution operation or the like at the time of connecting layers of a CNN, many weight values need to be transferred from a memory together with input data, which enormously increases a data amount and a calculation amount. An increasing number of layers constituting the CNN increase the weight values and the calculation amount. Processing of transferring data from a temporary memory to an arithmetic unit takes time. This deteriorates efficiency of the entire arithmetic processing. From the above, reducing the data amount is cited as a problem.

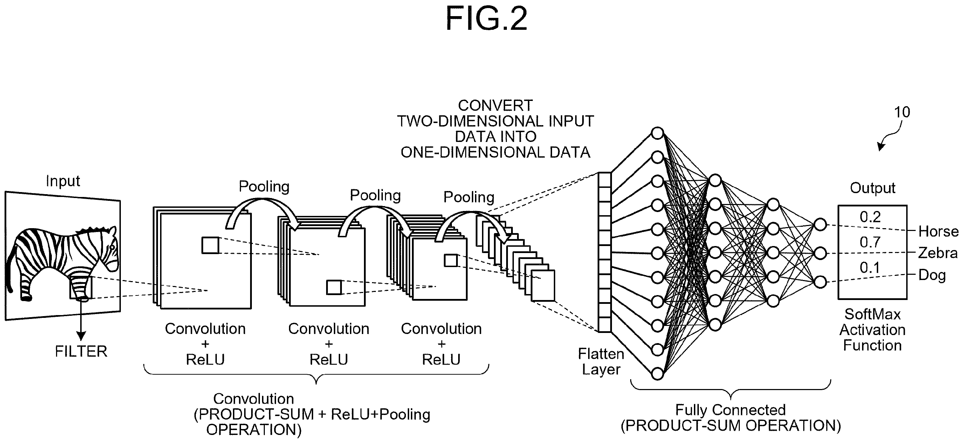

Here, arithmetic processing related to a CNN will be described with reference to FIG. 2. FIG. 2 is a reference diagram illustrating a structure of a CNN model 10. As illustrated in FIG. 2, the CNN model 10 includes a processing unit and fully connected layers. The processing unit repeats convolution layers and pooling layers. Then, in the CNN model 10, the processing unit executes a product-sum operation. Finally, the CNN model 10 outputs an inference result. In an example of FIG. 2, the CNN model 10 outputs a score indicating recognition of whether an object contained in an image of input data is a horse, a zebra, or a dog. Specifically, the CNN model 10 recognizes that the object included in the input data is a zebra with a score of 0.7. As described above, enormous arithmetic operations are necessary for an edge to acquire an image and output a result obtained by recognizing an object contained in the image.

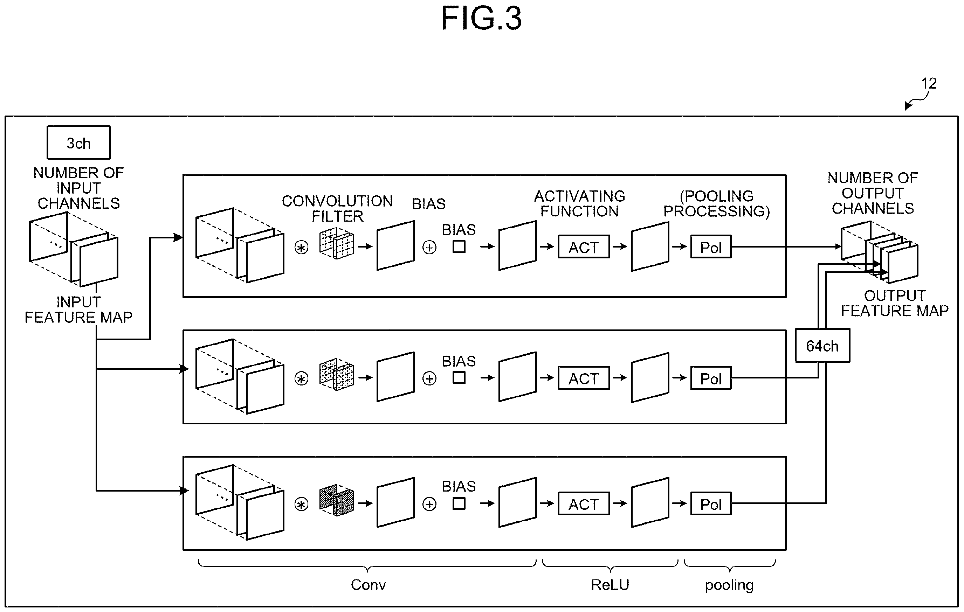

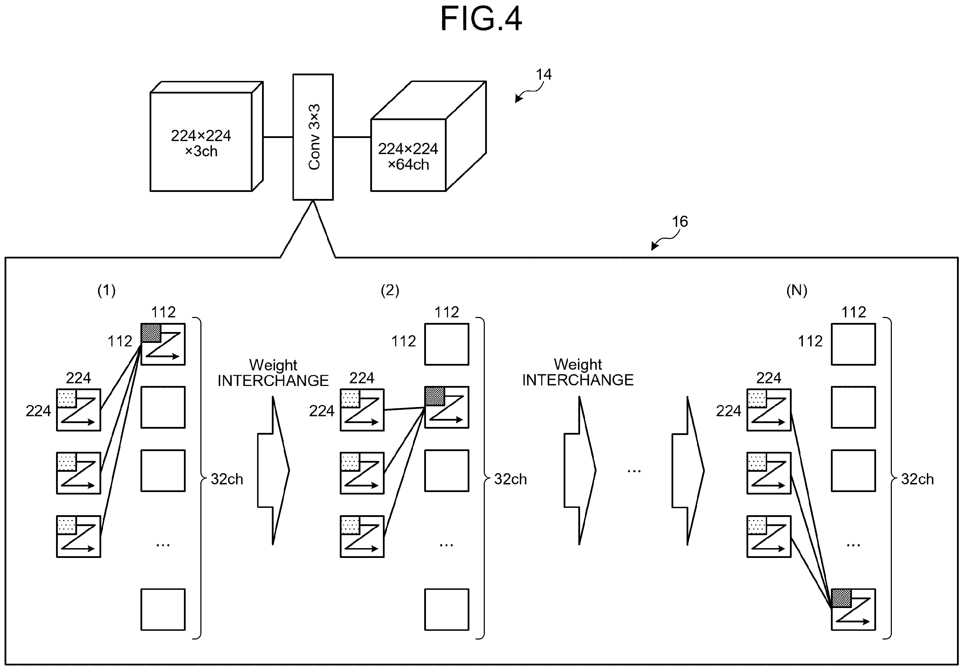

The above-described product-sum operation will be described in detail with reference to FIGS. 3 and 4. FIG. 3 is a reference diagram (1) illustrating arithmetic processing of the CNN model 10. Specifically, FIG. 3 illustrates a processing flow conceptually representing an arithmetic operation of the first convolution layer of the CNN model 10.

Since input data to the CNN model 10 is an image, information of (three) channels of RGB is included. In this case, the CNN model 10 is required to execute a product-sum operation for each of the channels of RGB. Here, when the CNN model 10 is a VGG-16 including a total of 16 layers of 13 convolution layers and three fully connected layers, the first convolution layer outputs 64 channels.

FIG. 4 is a conceptual diagram illustrating arithmetic processing of the CNN model 10. FIG. 4 is a reference diagram (2) illustrating the arithmetic processing of the CNN model 10. FIG. 4 includes a structure diagram 14 and a processing flow diagram 16. The structure diagram 14 conceptually illustrates the first convolution layer of the CNN model 10. The processing flow diagram 16 conceptually represents arithmetic processing of the convolution layer.

As illustrated in the processing flow diagram 16, when input data is two-dimensional image data of 224 pixels $\times$ 224 pixels and has channels of RGB, product-sum operation processing is executed in the CNN model 10. In the product-sum operation processing, the image data is passed through a $3 \times 3$ convolution filter, and multiplied by a weight value. Thereafter, in the CNN model 10, the weight value is interchanged, and an arithmetic operation is executed on the next channel. Such processing is repeated. In the CNN model 10, output ((224 $\times$ 224) $\times$ 64 channels in example of FIG. 4) in the first convolution layer is calculated. That is, the arithmetic processing of a neural network having a structure like the CNN model 10 needs transfer of enormous weight value data and arithmetic processing for calculation of each layer. Note that, in such a model of the CNN structure, a weight value is commonly given as 32-bit floating-point data and the like.

Here, there is a method of reducing data of weight values. In the method, weight values stored in 32-bit floating-point data having a relatively large data amount are stored in a format having a smaller data amount. For example, there is a method of replacing 32-bit floating-point data with 8-bit integer data. Since simply reducing a data amount of weight values may deteriorate the accuracy of the model, however, it is desirable to inhibit the data amount while maintaining the accuracy.

Therefore, the inference device 100 according to the embodiment has the following configuration to solve the above-described problem. That is, the inference device 100 acquires a weight value in a model in which a weight value is stored in a logarithm, converts the weight value into an integer at the time of arithmetic operation, and performs inference regarding input data input to the model by arithmetic processing using the integer obtained by the conversion. Specifically, the inference device 100 acquires a model in which weight values are stored in 4-bit logarithmic data, and stores the 4-bit logarithmic data, thereby reducing a memory amount. Furthermore, the inference device 100 can also reduce a transfer amount by transferring the 4-bit logarithmic data from the temporary memory to the arithmetic unit at the time of arithmetic operation. Moreover, at the time of arithmetic operation, the inference device 100 converts the 4-bit logarithmic data into 8-bit integer data with reference to, for example, a look up table, and uses the 8-bit integer data obtained by the conversion. The inference device 100 can thereby perform an arithmetic operation regarding the model without changing conventional circuit design. Therefore, the inference device 100 can perform inference processing using the model without requiring circuit design change or the like.

Returning to FIG. 1, processing performed by the inference device 100 according to the embodiment will be outlined. In the example of FIG. 1, the inference device 100 preliminarily acquires a model 30 learned by the learning server 200, and stores the model 30 in the memory 28. The model 30 is obtained by storing weight values of the CNN in the 4-bit logarithmic data.

The inference device 100 images an object by using a lens 20 and an image sensor 22. Then, the inference device 100 executes a predetermined task by using the model 30. For example, when the inference device 100 functions as a detector that detects a person, the inference device 100 executes processing of detecting a person in a captured image by using the model 30 learned for image recognition.

In this case, the inference device 100 reads data such as a weight value related to the model 30 from the memory 28, and inputs an image, which is input data. Then, the inference device 100 converts a weight value stored in 4-bit logarithmic data into 8-bit integer data, and performs an arithmetic operation related to the model 30. For example, the inference device 100 can quickly convert a logarithm into an integer by referring to a look up table in which the relation between the logarithm and the integer is preliminarily stored. The inference device 100 transmits an output result output from the model 30 to a detection processing unit 26, and detects a person in the image.

As described above, the inference device 100 acquires a weight value in the model 30 in which a weight value is stored in logarithm, and converts the acquired weight value into an integer at the time of arithmetic processing. Then, the inference device 100 performs inference regarding the input data input to the model 30 by arithmetic processing using the integer obtained by the conversion.

As a result, the inference device 100 can reduce an amount of transfer from the memory 28 to a product-sum operation processing unit 24 while reducing a storage capacity for storing weight value data. Furthermore, the inference device 100 uses 8-bit integer data after conversion at the time of an arithmetic operation, so that the inference device 100 can perform appropriate inference as is conventionally done. As a result, the inference device 100 can reduce an amount of data to be handled without deteriorating accuracy in an arithmetic operation of the model 30.

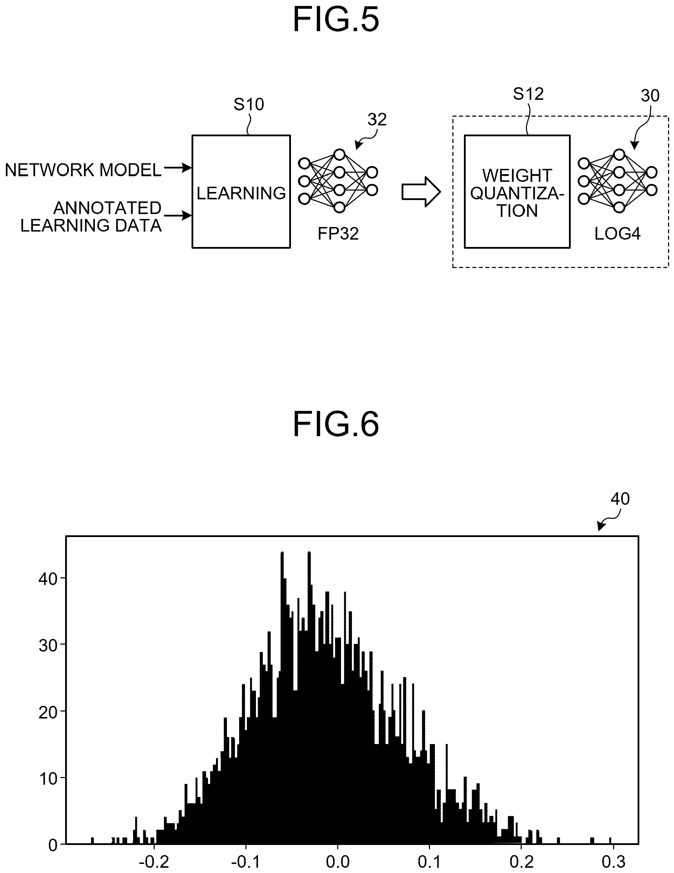

Here, the conversion of a weight value into a logarithm in the model 30 will be described with reference to FIG. 5 and subsequent drawings. FIG. 5 illustrates weight quantization in the model 30 according to the embodiment.

As illustrated in FIG. 5, the CNN model is commonly re-learned for a target task by using an original learned model and learning data intended (annotated) to execute predetermined task processing (Step S10). In this case, a weight value of the CNN model is indicated by 32-bit floating-point data, which is a format of a weight value of the original learned model.

In contrast, the learning server 200 according to the embodiment executes the weight quantization (Step S12). Specifically, the learning server 200 converts weight values indicated in different formats (e.g., 32-bit floating-point data) into 4-bit logarithmic data. This enables the learning server 200 to generate the model 30 having a weight value of 4-bit logarithmic data.

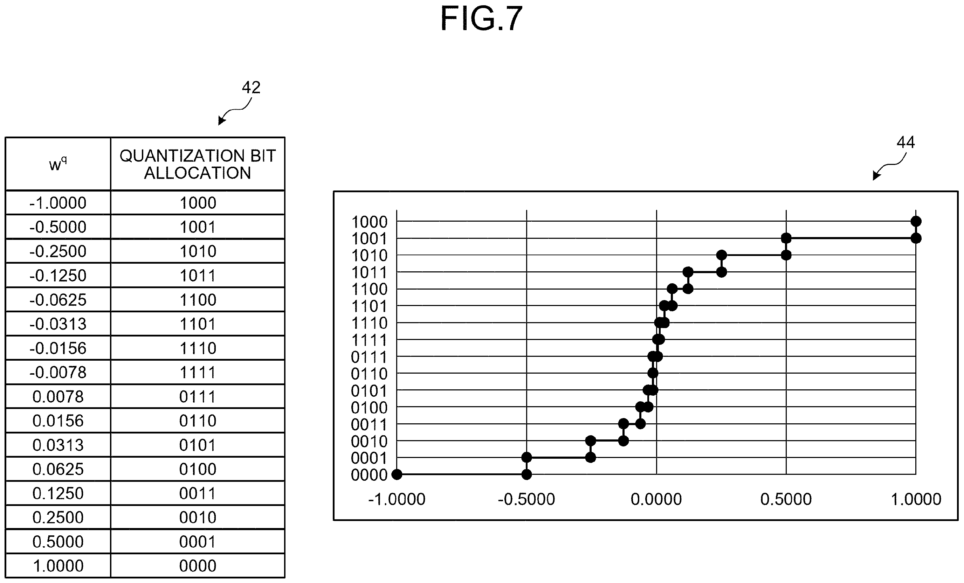

Here, a point that a weight value is maintained with appropriate accuracy even if the format of the weight value is converted into 4-bit logarithmic data will be described with reference to FIGS. 6 and 7. FIG. 6 is a reference diagram illustrating distribution of weight values in the CNN model. FIG. 6 conceptually illustrate, as distribution, what values the weight values in the CNN model have.

As illustrated in a graph 40 of FIG. 6, when a horizontal axis represents weight values and a vertical axis represents the frequency of weight values included in one model, common weight values in the CNN model have normal distribution around zero. Due to such characteristics, even in the same 4-bit representations, the original data can be expressed more finely in numerical values by using logarithms than integers. This point will be described with reference to FIG. 7.

FIG. 7 illustrates a logarithmic representation of a weight value in the CNN model. Table 42 is a data table illustrating the relation between a weight value ($W^q$) and quantization bit allocation. Furthermore, Graph 44 is obtained by plotting values in Table 42. In the graph 44, a vertical axis represents quantization data allocated to weight values, and a horizontal axis represents the weight values. That is, the learning server 200 can improve quantization accuracy by finely expressing a central portion (vicinity of zero) having high occurrence frequency in numerical values in the normal distribution. Furthermore, using a logarithm enables multiplication after converting a logarithm into an integer only by a shift operation. For example, Expression (1) below is used for converting a weight value into a logarithm.

$$AP2(w) = sign(w) \times 2^{round\,(log_2|w|)} \qquad \cdots (1)$$

As illustrated in Expression (1), the learning server 200 performs an arithmetic operation of approximating an original weight value to a power of two closest to the original weight value for converting a weight value into a logarithm. Moreover, the learning server 200 can reduce a quantization error by using Expression (2) below for a median.

$$round(x) = \begin{cases} ceil(x) & \left(x - [x] \geq log_2\left(\frac{3}{2}\right)\right) \\ floor(x) & \left(x - [x] < log_2\left(\frac{3}{2}\right)\right) \end{cases} \qquad \cdots (2)$$

The learning server 200 converts a weight value expressed as, for example, 32-bit floating-point data into 4-bit logarithmic data by the above-described arithmetic operation. Moreover, in order to limit the width of the distribution of weight values, the learning server 200 performs clipping to a region in which a weight value has a minimum value (minV) of minus one and a maximum value (maxV) of one. For example, the learning server 200 uses Expression (3) below.

$$w^q = LogQuant(w, bitwidh, maxV)$$
$$= Clip(AP2(w), minV, maxV) \qquad \cdots (3)$$

Logarithmic data in Table 42 and Graph 44 is obtained through the arithmetic operation of Expression (3) above. Note that, in order to enhance quantization accuracy, the learning server 200 may perform re-learning for reducing an error caused by quantization by quantization-aware training (QAT) to minimize a reduction in inference accuracy. For example, the learning server 200 performs learning by using a predetermined error function such that an error between the weight values clipped from minus one to one and correct answer data (teacher data) is gradually decreased. For example, the learning server 200 determines a loss function E(w) from network output Wq obtained by forward propagation and correct answer data W, and searches for a parameter that minimizes E(w). Furthermore, in order to inhibit over-learning due to an excessive increase in weight parameters, the learning server 200 performs back propagation. The learning server 200 reduces the quantization error by minimizing the loss function while performing adjustment so that a weight of correct answer data approaches a weight after quantization.

(1-2. Procedure of Inference Processing According to Embodiment)

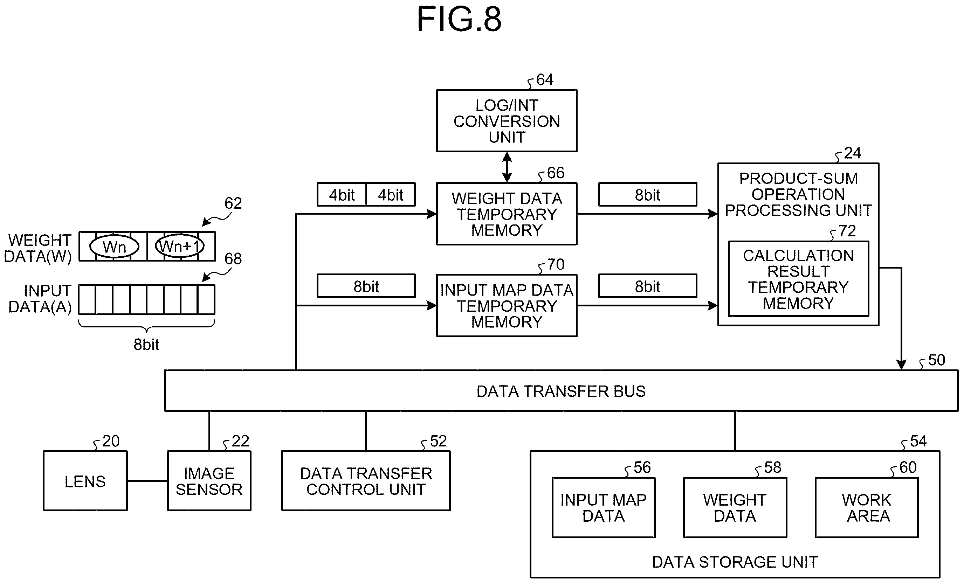

Next, a flow of inference processing performed by the inference device 100 using a weight value stored in 4-bit logarithmic data will be described with reference to FIG. 8. FIG. 8 is a flowchart illustrating a procedure of the inference processing according to the embodiment.

Specifically, FIG. 8 illustrates a process in which the inference device 100 having the model 30 stored in 4-bit logarithmic data obtains predetermined input data and performs an arithmetic operation. FIG. 8 illustrates a configuration of the inference device 100 in FIG. 1 in more detail. For example, a data storage unit 54 in FIG. 8 corresponds to the memory 28 in FIG. 1. In addition to input map data 56 and weight data 58, the data storage unit 54 includes a work area 60, which is a storage region used for various pieces of information processing. Note that the input map data 56 indicates input data expressed as an image, and is treated as synonymous with the input data in the present disclosure.

In an example of FIG. 8, the inference device 100 holds the preliminarily learned model 30 (i.e., weight data 58) in the data storage unit 54. At the time of an arithmetic operation, first, a data transfer control unit 52 transfers weight data of 32 channels ((3 × 3) × 3 ch × 64 ch) as illustrated in (1) of FIG. 4 to a weight data temporary memory 66 via a data transfer bus 50. For example, the data transfer control unit 52 transfers data 62 in a format of 4 bits + 4 bits to the weight data temporary memory 66. The data 62 contains the n-th weight value $W_n$ and the next weight value $W_{n+1}$.

Subsequently, a LOG/INT conversion unit 64 converts the 4-bit logarithmic data transferred to the weight data temporary memory 66 into 8-bit integer data.

Here, the data transfer control unit 52 transfers the input map data 56 to an input map data temporary memory 70 while the LOG/INT conversion unit 64 performs conversion processing. The input map data 56 is acquired via the lens 20 and the image sensor 22, and stored in the data storage unit 54. Specifically, the data transfer control unit 52 transfers the input data of three lines (224 × 3 × 3 ch) to the input map data temporary memory 70 via the data transfer bus 50. In this case, the data transfer control unit 52 transfers data 68 in an 8-bit format to the input map data temporary memory 70.

The above-described conversion processing and transfer processing may be simultaneously executed under the control of the data transfer control unit 52. That is, the efficiency of the entire inference processing can be improved by executing so-called pipeline processing in which the transfer processing is performed simultaneously with the conversion processing.

Subsequently, the product-sum operation processing unit 24 acquires data acquired from the weight data temporary memory 66 and the input map data temporary memory 70, and executes an arithmetic operation and the like related to convolution. The product-sum operation processing unit 24 stores a result of the arithmetic operation in a calculation result temporary memory 72. Subsequently, the product-sum operation processing unit 24 performs ReLU processing, and stores the result in the calculation result temporary memory 72. The data transfer control unit 52 transfers input data of the next three lines to the input map data temporary memory 70 while transferring the result of the ReLU processing from the calculation result temporary memory 72 to the work area 60. The product-sum operation processing unit 24 repeats the above-described processing for each layer, and advances the arithmetic processing in the model 30.

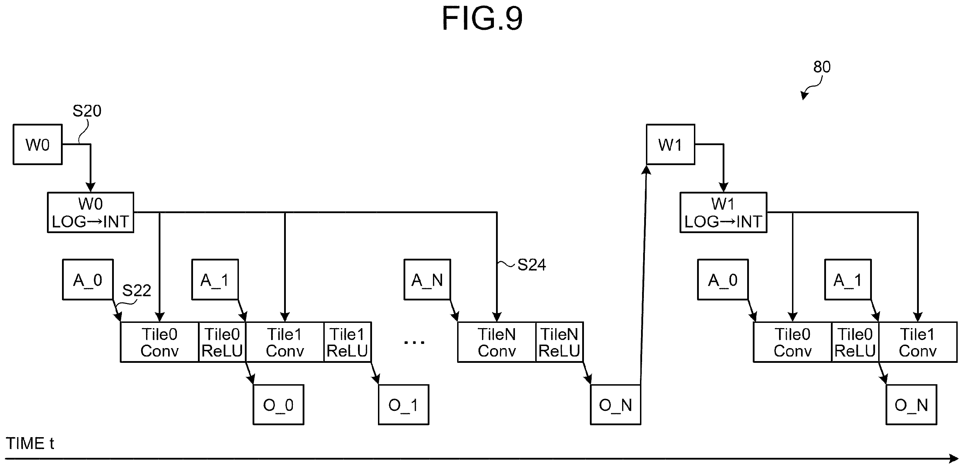

The processing in FIG. 8 will be described in more detail with reference to a time series. FIG. 9 is a flowchart illustrating the inference processing according to the embodiment in the time series.

A timing chart 80 in FIG. 9 illustrates a flow of the inference processing according to the embodiment in the time series. Symbols of "W", "A", and "O" in the timing chart 80 represent a weight value, input data, and output from an intermediate layer of the model 30, respectively.

As illustrated in FIG. 8, the data transfer control unit 52 transfers the first weight value to the weight data temporary memory 66 (Step S20). In this case, as illustrated in FIG. 8, the data transfer control unit 52 transfers two pieces of 4-bit logarithmic data of 4 bits + 4 bits as the first weight value. While the LOG/INT conversion unit 64 converts the transferred weight value, the data transfer control unit 52 transfers the first input data to the input map data temporary memory 70 (Step S22).

Thereafter, the product-sum operation processing unit 24 performs convolution processing by using the weight value converted from the first 4-bit logarithmic data into an integer and the input data. When ending the ReLU processing of a first intermediate layer, the product-sum operation processing unit 24 outputs the first output result ("O_0" in FIG. 9) while obtaining input data ("A_1" in FIG. 9) of the next three lines. Specifically, while the product-sum operation processing unit 24 stores the result obtained by the ReLU processing in the calculation result temporary memory 72 while the data transfer control unit 52 transfers input data of the next three lines to the input map data temporary memory 70. The product-sum operation processing unit 24 acquires the next weight value, and sequentially advances the arithmetic processing in the model 30.

The inference device 100 repeats such processing for each layer of the model 30. As illustrated in FIG. 9, the inference device 100 can improve the efficiency of the entire processing by performing pipeline processing in which product-sum operations of respective layers are performed in parallel with conversion from logarithms into integers.

(1-3. Configuration of Inference Device According to Embodiment)

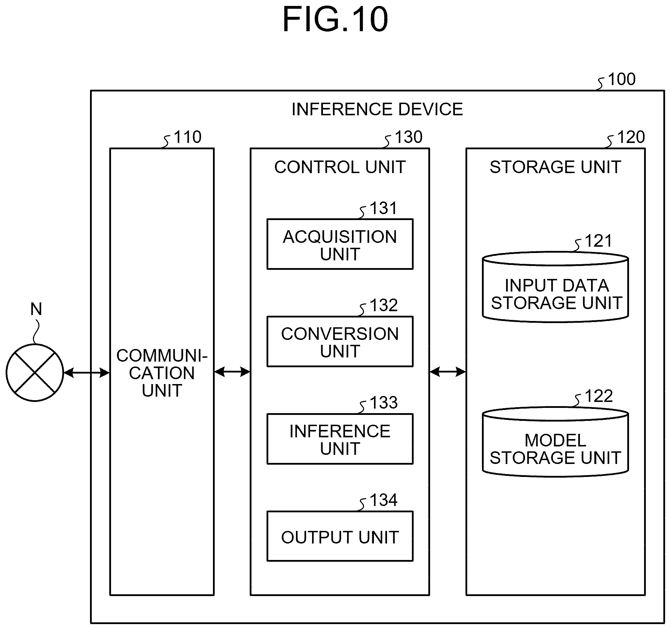

Next, a configuration of the inference device 100 will be described. FIG. 10 illustrates a configuration example of the inference device 100 according to the embodiment. Note that FIG. 10 does not illustrate various elements such as an optical mechanism and an image sensor for implementing a function of a camera, such as the lens 20 and the image sensor 22.

As illustrated in FIG. 10, the inference device 100 includes a communication unit 110, a storage unit 120, and a control unit 130. Note that the inference device 100 may include an input unit (e.g., touch display) and a display unit (e.g., liquid crystal display). The input unit receives various operations from an administrator and the like who manage the inference device 100. The display unit displays various pieces of information.

The communication unit 110 is implemented by, for example, a network interface card (NIC) and a network interface controller. The communication unit 110 is connected to a network N in a wired or wireless manner, and transmits and receives information to and from the learning server 200 and the like via the network N. The network N is implemented by a wireless communication standard or system such as Bluetooth (registered trademark), the Internet, Wi-Fi (registered trademark), ultra wide band (UWB), a low power wide area (LPWA), and ELTRES (registered trademark).

The storage unit 120 is implemented by, for example, a semiconductor memory element, such as a random access memory (RAM) and a flash memory, or a storage device, such as a hard disk and an optical disk. The storage unit 120 includes an input data storage unit 121 and a model storage unit 122.

The input data storage unit 121 stores data to be input to the model 30. For example, the input data includes image map data (e.g., two-dimensional image data of 224 × 224 pixels) acquired by the image sensor 22. The model storage unit 122 stores a learned model learned by the learning server 200. For example, the model storage unit 122 stores the model 30 having the CNN structure (in other words, weight value in each layer of model 30). As described above, the model storage unit 122 stores a weight value in a format of 4-bit logarithmic data.

The control unit 130 is implemented by, for example, a central processing unit (CPU), an MPU, and a graphics processing unit (GPU) executing a program (e.g., inference program according to present disclosure) stored in the inference device 100 by using a random access memory (RAM) or the like as an operation region. Furthermore, the control unit 130 is a controller, and may be implemented by an integrated circuit such as an application specific integrated circuit (ASIC), a field programmable gate array (FPGA), and an MCU.

As illustrated in FIG. 10, the control unit 130 includes an acquisition unit 131, a conversion unit 132, an inference unit 133, and an output unit 134.

The acquisition unit 131 acquires various pieces of information. For example, the acquisition unit 131 acquires an image, which is input data, from the image sensor 22. Furthermore, the acquisition unit 131 acquires a pre-learned model and a re-learned model from the learning server 200.

For example, the acquisition unit 131 acquires a weight value in a neural network in which a weight value is stored in logarithm. In one example of the neural network, the acquisition unit 131 acquires a weight value in the CNN. Note that the processing according to the present disclosure may be applied not only to the CNN but to various neural network models.

Specifically, the acquisition unit 131 acquires 4-bit logarithmic data as a weight value. More specifically, the acquisition unit 131 acquires a weight value in a neural network within a predetermined range in which a maximum value and a minimum value are set. In the neural network, weight values are learned by QAT and the like so as to approach a value expressed in 4-bit logarithmic data.

For example, as illustrated in FIG. 7, the acquisition unit 131 acquires, as a weight value, 4-bit logarithmic data within a predetermined range in which the maximum value is set as one or less and the minimum value is set as minus one or more. Since many weight values in the CNN have values near the median in accordance with normal distribution, the original weight value can be accurately expressed by being expressed in logarithmic data capable of finely quantizing the vicinity of the median.

Note that the acquisition unit 131 may acquire, as a weight value, 4-bit logarithmic data within a predetermined range in which the maximum value is set as 0.25 or less and the minimum value is set as minus 0.25 or less. As described above, many weight values in the CNN have values near the median in accordance with the normal distribution. The original weight value may be able to be accurately expressed more accurately by being set not in a range including one or minus one but in a narrower range.

Furthermore, when an administrator and the like of the inference device 100 input information, the acquisition unit 131 may acquire various pieces of input information. Furthermore, the acquisition unit 131 may have a function corresponding to the data transfer control unit 52 in FIG. 8. The acquisition unit 131 may acquire various pieces of information stored in the storage unit 120 to transfer the information to a processing unit in a subsequent stage, or store the various pieces of information in the storage unit 120.

The conversion unit 132 corresponds to the LOG/INT conversion unit 64 in FIG. 8, and converts a weight value acquired by the acquisition unit 131 into an integer.

For example, when the weight value is 4-bit logarithmic data, the conversion unit 132 converts the 4-bit logarithmic data into 8-bit integer data by using a look up table. Note that, although, in the example of the present disclosure, an example in which 4-bit logarithmic data is converted into 8-bit integer data is illustrated, a quantization bit value is appropriately changed.

Note that the conversion unit 132 may have a function corresponding to the data transfer control unit 52 in FIG. 8. The conversion unit 132 may acquire various pieces of information stored in the storage unit 120 to transfer the information to a processing unit in a subsequent stage, or store the various pieces of information in the storage unit 120.

The inference unit 133 corresponds to the product-sum operation processing unit 24 and the detection processing unit 26 in FIGS. 1 and 8. The inference unit 133 performs inference regarding input data input to the neural network by an arithmetic processing using the integer obtained by conversion performed by the conversion unit 132. For example, the inference unit 133 executes, as inference processing, tasks such as image recognition processing and detection processing. The image recognition processing relates to a type of an object contained in an image. In the detection processing, a human face in an image is detected.

In this case, the inference unit 133 may perform so-called pipeline processing of transferring input data to be input to the neural network to a temporary memory in parallel with the processing of the conversion unit 132 converting a weight value into an integer.

Note that the inference unit 133 may have a function corresponding to the data transfer control unit 52 in FIG. 8. The inference unit 133 may acquire various pieces of information stored in the storage unit 120 to transfer the information to a processing unit in a subsequent stage, or store the various pieces of information in the storage unit 120.

The output unit 134 outputs various pieces of information. For example, the output unit 134 outputs a result inferred by the inference unit 133.

(1-4. Configuration Example of Arithmetic Circuit According to Embodiment)

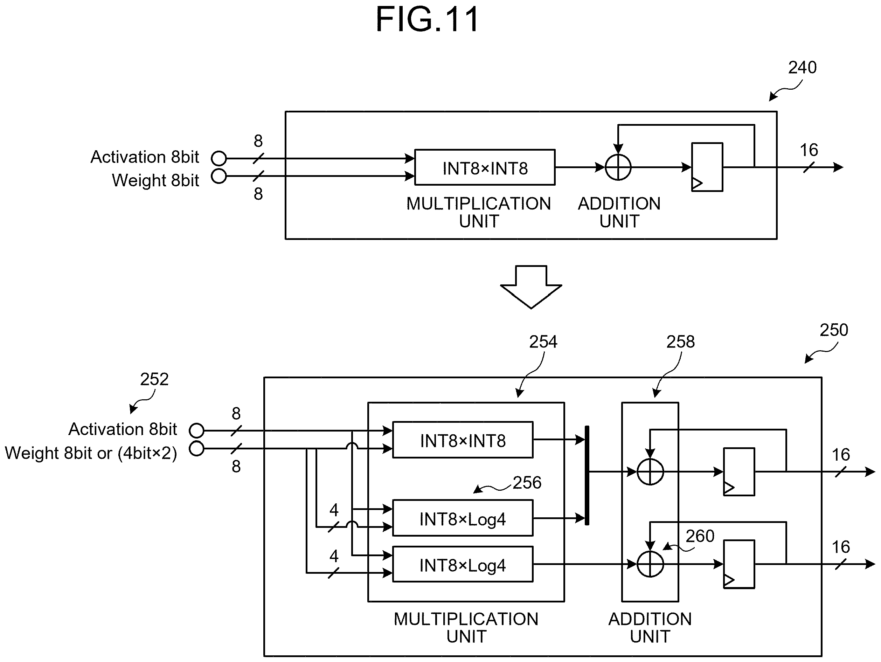

In the above-described embodiment, an example of software implementation has been described in which the inference device 100 performs processing of converting logarithmic data into integer data and then performs arithmetic processing. Here, assuming that an arithmetic operation of logarithmic data is performed, a multiplication circuit different from a conventional one can be proposed. That is, the inference processing according to the embodiment may be performed by hardware implementation (circuit configuration). This point will be described with reference to FIG. 11.

FIG. 11 illustrates an example of an arithmetic circuit configuration according to the embodiment. A circuit configuration 240 in FIG. 11 illustrates a conventional arithmetic circuit configuration. That is, in the circuit configuration 240, input data of 8-bit integer data ("Activation 8bit" in FIG. 11) and a weight value converted into 8-bit integer data ("Weight 8bit" in FIG. 11) are input to a multiplication unit, and output via an addition unit.

In contrast, a circuit configuration 250 is obtained by partially changing the circuit configuration 240 in order to perform arithmetic processing according to the embodiment. Specifically, the circuit configuration 250 includes a circuit 256 for performing an arithmetic operation on integer data and logarithmic data. In this case, input data 252 to the circuit configuration 250 includes a weight value of logarithmic data ("Weight 8bit or (4bit $\times$ 2)" in FIG. 11) .

In this case, a multiplication unit 254 can perform an arithmetic operation using a circuit 256. That is, when a product-sum operation is performed on a logarithmic weight value and integer input data, only shift processing is required to be performed. The multiplication unit 254 can thus simultaneously execute two multiplication instructions by adding the circuit 256 that selects and outputs a multiplier factor in an array-type parallel multiplier. Specifically, the circuit 256 is configured as a shift circuit (shifter) to which input data of 8-bit integer data and a weight value of 4-bit logarithmic data are input. When the circuit 256 is passed through, an addition unit 258 in the subsequent stage outputs an arithmetic result through a circuit 260. This enables the circuit configuration 250 to achieve doubled multiplication performance of the circuit configuration 240. Note that, as illustrated in FIG. 11, the multiplication unit 254 can also perform conventional multiplication of pieces of 8-bit integer data by switching between circuits and performing an arithmetic operation. Furthermore, the multiplication unit 254 can be implemented on a circuit scale substantially equivalent to that of a conventional multiplication unit. Moreover, a limitation to an arithmetic operation of Log eliminates the need for a multiplier of INT8 $\times$ INT8 of the multiplication unit 254, so that the circuit scale can be further reduced.

As described above, the inference device 100 may perform inference regarding input data input to the neural network by providing a dedicated circuit in hardware and directly performing an arithmetic operation on logarithmic data and the input data by using a shift circuit without converting the logarithmic data into the integer data.

(1-5. Configuration of Inference Device According to Variation)

In the above-described embodiment, the inference device 100 has been described as having the configuration in FIG. 10. The inference device according to the present disclosure, however, does not necessarily need to be a stand-alone information processing device. That is, the inference device according to the present disclosure may be configured as a so-called AI image sensor (AI chip) in which an automatic recognition model is incorporated in an image sensor and both object detection and imaging can be performed by performing inference processing by using a model.

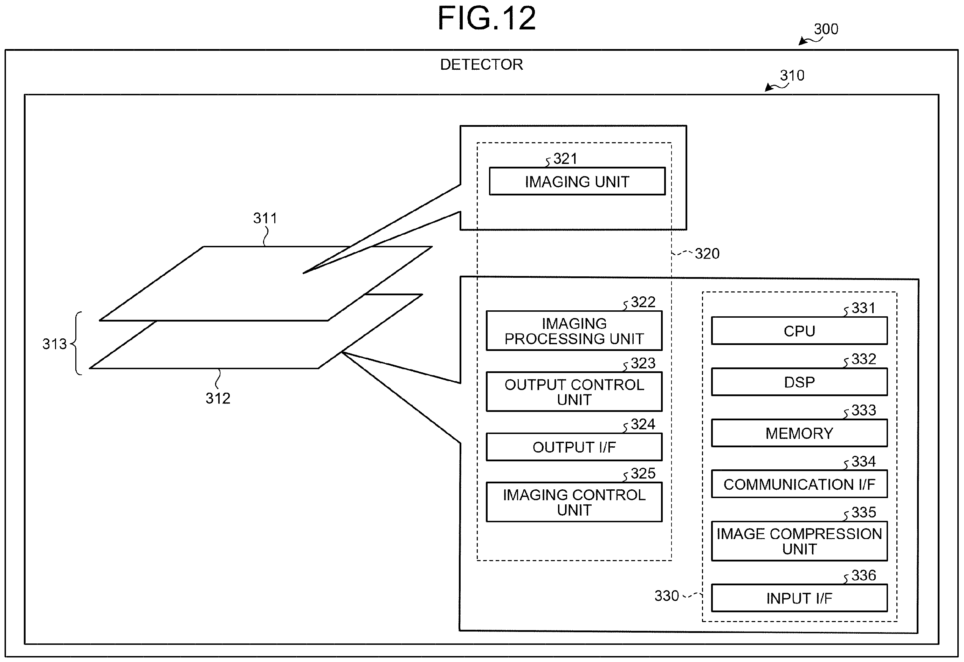

This point will be described with reference to FIG. 12. FIG. 12 illustrates a configuration example of an inference device according to a variation. FIG. 12 illustrates a detector 300 as one example of the inference device according to the variation.

As illustrated in FIG. 12, the detector 300 includes an image sensor 310. Note that, although not illustrated in FIG. 12, the detector 300 includes an optical system for implementing a function as a digital camera and a communication system for communicating with the learning server 200.

The image sensor 310 is, for example, a complementary metal oxide semiconductor (CMOS) image sensor including a chip. The image sensor 310 receives incident light from the optical system, performs photoelectric conversion, and outputs image data corresponding to the incident light.

The image sensor 310 has a configuration in which a pixel chip 311 is integrated with a logic chip 312 via a connection portion 313. Furthermore, the image sensor 310 includes an image processing block 320 and a signal processing block 330.

The pixel chip 311 includes an imaging unit 321. The imaging unit 321 includes a plurality of two-dimensionally arranged pixels. The imaging unit 321 is driven by an imaging processing unit 322, and captures an image.

Under the control of an imaging control unit 325, the imaging processing unit 322 performs driving of the imaging unit 321, analog to digital (AD) conversion of an analog image signal output by the imaging unit 321, and imaging processing related to image capturing in the imaging unit 321 such as imaging signal processing.

A captured image output from the imaging processing unit 322 is supplied to an output control unit 323, and supplied to an image compression unit 335. Furthermore, the imaging processing unit 322 passes the captured image to an output I/F 324.

The output control unit 323 performs output control of selectively outputting a captured image from the imaging processing unit 322 and a signal processing result from the signal processing block 330 from the output I/F 324 to the outside (in embodiment, terminal device 400 or inference device 100). That is, the output control unit 323 performs control to selectively output, to the outside, at least one of behavior data indicating a detected behavior of an object and an image.

Specifically, the output control unit 323 selects the captured image from the imaging processing unit 322 or the signal processing result from the signal processing block 330, and supplies the captured image or the signal processing result to the output I/F 324.

For example, when the inference device 100 requests both image data and behavior data, the output I/F 324 can output both pieces of data. Alternatively, when the inference device 100 requests only behavior data, the output I/F 324 can output only the behavior data. That is, when a captured image itself is not necessary for secondary analysis, the output I/F 324 can output only the signal processing result (behavior data), so that an amount of data to be output to the outside can be reduced.

As illustrated in FIG. 12, the signal processing block 330 includes a CPU 331, a DSP 332, a memory 333, a communication I/F 334, the image compression unit 335, and an input I/F 336.

For example, the CPU 331 and the DSP 332 recognize an object from an image contained in the image compression unit 335 by using a pre-learned model incorporated in the memory 333 via the communication I/F 334 or the input I/F 336. Furthermore, the CPU 331 and the DSP 332 acquire behavior data indicating the behavior of the recognized object. In other words, in the signal processing block 330, functional units cooperate with each other, and detect the behavior of the object included in the image by using a pre-learned model for recognizing the object.

The above-described configuration enables the detector 300 according to the embodiment to selectively output, to the outside, image data obtained by the image processing block 320 and behavior data obtained by the signal processing block 330.

Note that the detector 300 may include various sensors in addition to the configuration in FIG. 12. For example, the detector 300 may include a ToF sensor, which is a depth sensor that measures a distance to an object present in space. This enables the detector 300 to acquire, as behavior data, not only two-dimensional point cloud data indicated on an image but three-dimensional point cloud data to which height information is added.

The configuration in FIG. 12 corresponds to the configuration of the inference device 100 in FIG. 10. For example, the CPU 331 corresponds to the control unit 130. That is, the inference device according to the present disclosure is not limited to the inference device 100 in FIG. 10, and may be configured as an element having an information processing function such as an AI image sensor.

<2. Other Embodiments>

The processing according to the above-described embodiment may be carried out in various forms different from the form of the above-described embodiment.

In the above-described embodiment, an example in which the learning server 200 performs learning processing has been described. When, for example, the inference device 100 includes a sufficient GPU, however, the inference device 100 may perform the learning processing.

Furthermore, in the above-described embodiment, an example in which the inference device 100 acquires a model with a weight value stored in 4-bit logarithmic data and performs inference processing by using the model has been described. The weight value stored in the model is, however, not limited to the 4-bit logarithmic data, and may be quantized in another format such as three bits and six bits. For example, a model in which 3-bit logarithmic data is stored as a weight value can further reduce a storage capacity and a transfer amount.

Furthermore, in the above-described embodiment, an example has been described in which clipping is performed in a possible range of a weight value of 4-bit logarithmic data. In the range, the maximum value is set as one, and the minimum value is set as minus one. The range is, however, one example. The range of a weight value is not limited to the example. Any range may be determined in accordance with, for example, the type of a task of inference processing performed by a model. That is, the weight value may be a numerical value in a range exceeding one and minus one. Similarly, in the above-described embodiment, an example has been described in which clipping is performed in a range in which a weight value can be defined in more detail. In the range, the maximum value is set as 0.25, and the minimum value is set as minus 0.25. Any range, however, may be determined as the above-described range in accordance with the type of a task of inference processing performed by a model, the number of quantization bits, and the like.

Furthermore, in the above-described embodiment, a model for performing recognition of an object and the like has been described as a pre-learned model. The task executed by a model is, however, not limited to the object recognition. Information processing according to the present disclosure can be applied to any model as long as the model is generated by using machine learning of DNN and the like.

Furthermore, among pieces of processing described in the above-described embodiment, all or part of the processing described as being performed automatically can be performed manually, or all or part of the processing described as being performed manually can be performed automatically by a known method. In addition, the processing procedures, the specific names, and information including various pieces of data and parameters in the above-described document and drawings can be optionally changed unless otherwise specified. For example, various pieces of information in each figure are not limited to the illustrated information.

Furthermore, each component of each illustrated device is functional and conceptual, and does not necessarily need to be physically configured as illustrated. That is, the specific form of distribution/integration of each device is not limited to the illustrated one, and all or part of the device can be configured in a functionally or physically distributed/integrated manner in any unit in accordance with various loads and use situations. For example, the conversion unit 132 may be integrated with the inference unit 133.

Furthermore, the above-described embodiment and variation thereof can be appropriately combined as long as the processing contents do not contradict each other.

Furthermore, the effects described in the present specification are merely examples and not limitations. Other effects may be exhibited.

(3. Effects of Inference Device According to Present Disclosure)

As described above, the inference device (inference device 100 in embodiment) according to the present disclosure includes an acquisition unit (acquisition unit 131 in embodiment), a conversion unit (conversion unit 132 in embodiment), and an inference unit (inference unit 133 in embodiment). The acquisition unit acquires a weight value in a neural network in which a weight value is stored in logarithm. The conversion unit converts the weight value acquired by the acquisition unit into an integer. The inference unit performs inference regarding input data input to the neural network by arithmetic processing using the integer obtained by conversion performed by the conversion unit.

As described above, the inference device according to the present disclosure can reduce a data amount by holding a weight value related to the neural network in logarithm and easily perform arithmetic processing. The inference device thus can reduce a data amount to be handled without deteriorating accuracy in the arithmetic operation.

Furthermore, the inference unit transfers input data to be input to the neural network to a temporary memory in parallel with processing of the conversion unit converting a weight value into an integer.

As described above, the inference device can quickly execute even inference processing using a neural network with a large arithmetic amount by performing so-called pipeline processing.

Furthermore, the acquisition unit acquires 4-bit logarithmic data as a weight value. The conversion unit converts the 4-bit logarithmic data into 8-bit integer data by using a look up table.

As described above, the inference device converts logarithmic data into the integer data by using a look up table, so that the inference device can perform conversion processing at a high speed.

Furthermore, the acquisition unit acquires a weight value in a neural network within a predetermined range in which a maximum value and a minimum value are set. In the neural network, the weight value has been learned so as to approach a value expressed in 4-bit logarithmic data. The conversion unit converts the weight value acquired by the acquisition unit into an integer.

As described above, the inference device holds a weight value clipped in a predetermined range, so that the inference device can perform inference processing by using a value obtained by accurately quantizing a weight value of a neural network that tends to have normal distribution.

Furthermore, the acquisition unit acquires, as a weight value, 4-bit logarithmic data within a predetermined range in which the maximum value is set as one or less and the minimum value is set as minus one or more.

As described above, the inference device can perform inference processing by using an accurately quantized weight value in line with the tendency of the normal distribution.

Furthermore, the acquisition unit acquires, as a weight value, 4-bit logarithmic data within a predetermined range in which the maximum value is set as 0.25 or less and the minimum value is set as minus 0.25 or more.

As described above, the inference device can perform inference processing by using a more accurately quantized weight value by narrowing a possible range of the weight value.

Furthermore, the acquisition unit acquires a weight value in a convolutional neural network (CNN) as a neural network.

As described above, the inference device can perform inference processing with high accuracy for predetermined task processing in which image data and the like are used as input data by using the CNN.

Furthermore, the inference device may include an acquisition unit and an inference unit. The acquisition unit acquires a weight value in a neural network in which a weight value is stored in logarithm. The inference unit performs inference regarding input data input to the neural network by performing an arithmetic operation on a logarithm acquired by the acquisition unit and the input data by using a shift circuit.

As described above, the inference device has a circuit configuration suitable for an arithmetic operation related to a logarithm, which can improve arithmetic capability without expanding a conventional circuit scale.

(4. Hardware Configuration)

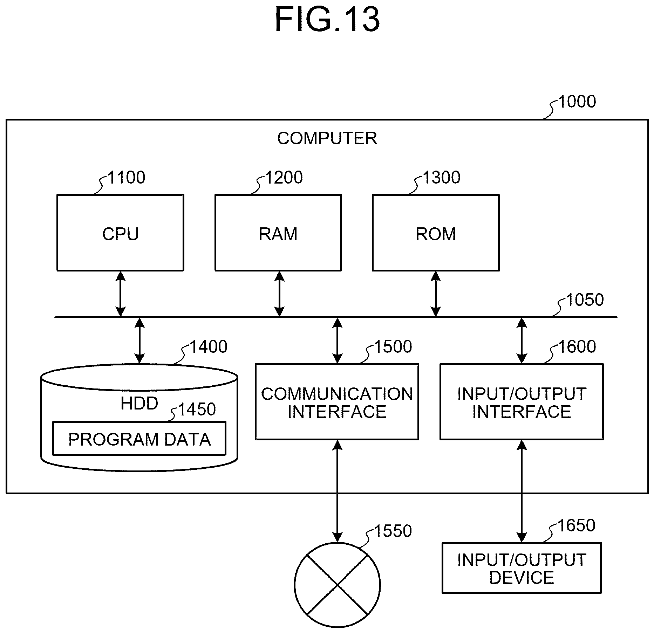

Information equipment such as the inference device 100 according to the above-described embodiment is implemented by a computer 1000 having a configuration as illustrated in FIG. 13, for example. The inference device 100 according to the present disclosure will be described below as an example. FIG. 13 is a hardware configuration diagram illustrating one example of the computer 1000 that implements the function of the inference device 100. The computer 1000 includes a CPU 1100, a RAM 1200, a read only memory (ROM) 1300, a hard disk drive (HDD) 1400, a communication interface 1500, and an input/output interface 1600. Units of the computer 1000 are connected by a bus 1050.

The CPU 1100 operates based on a program stored in the ROM 1300 or the HDD 1400, and controls each unit. For example, the CPU 1100 develops the program stored in the ROM 1300 or the HDD 1400 on the RAM 1200, and executes processing corresponding to various programs.

The ROM 1300 stores a boot program such as a basic input output system (BIOS) executed by the CPU 1100 at the time when the computer 1000 is started, a program depending on the hardware of the computer 1000, and the like.

The HDD 1400 is a computer-readable recording medium that non-transiently records a program executed by the CPU 1100, data used by the program, and the like. Specifically, the HDD 1400 is a recording medium that records an inference program according to the present disclosure. The program is one example of program data 1450.

The communication interface 1500 connects the computer 1000 with an external network 1550 (e.g., Internet). For example, the CPU 1100 receives data from other equipment, and transmits data generated by the CPU 1100 to other equipment via the communication interface 1500.

The input/output interface 1600 connects an input/output device 1650 with the computer 1000. For example, the CPU 1100 receives data from an input device such as a keyboard and a mouse via the input/output interface 1600. Furthermore, the CPU 1100 transmits data to an output device such as a display, an edge, and a printer via the input/output interface 1600. Furthermore, the input/output interface 1600 may function as a medium interface that reads a program and the like recorded in a predetermined recording medium. The medium includes, for example, an optical recording medium such as a digital versatile disc (DVD) and a phase change rewritable disk (PD), a magneto-optical recording medium such as a magneto-optical disk (MO), a tape medium, a magnetic recording medium, and a semiconductor memory.

For example, when the computer 1000 functions as the inference device 100 according to the embodiment, the CPU 1100 of the computer 1000 implements the functions of the control unit 130 and the like by executing an inference program loaded on the RAM 1200. Furthermore, the HDD 1400 stores an inference program according to the present disclosure and data in the storage unit 120. Note that the CPU 1100 reads the program data 1450 from the HDD 1400 and executes the program data 1450. In another example, the CPU 1100 may acquire these programs from another device via the external network 1550.

Note that the present technology can also have the configurations as follows.

(1) An inference device comprising:

an acquisition unit that acquires a weight value in a neural network in which the weight value is stored in logarithm;
a conversion unit that converts the weight value acquired by the acquisition unit into an integer; and
an inference unit that performs inference regarding input data input to the neural network by arithmetic processing using the integer obtained by conversion performed by the conversion unit.

(2) The inference device according to (1),
wherein the inference unit transfers input data to be input to the neural network to a temporary memory in parallel with processing of the conversion unit converting the weight value into the integer.

(3) The inference device according to (1) or (2),

wherein the acquisition unit acquires 4-bit logarithmic data as the weight value, and

the conversion unit converts the 4-bit logarithmic data into 8-bit integer data by using a look up table.

(4) The inference device according to (3),

wherein the acquisition unit acquires a weight value in the neural network within a predetermined range in which a maximum value and a minimum value are set, the weight value having been learned so as to approach a value expressed in 4-bit logarithmic data in the neural network, and
the conversion unit converts the weight value acquired by the acquisition unit into an integer.

(5) The inference device according to (4),
wherein the acquisition unit acquires, as the weight value, 4-bit logarithmic data within the predetermined range in which a maximum value is set as one or less and a minimum value is set as minus one or more.
(6) The inference device according to (4),
wherein the acquisition unit acquires, as the weight value, 4-bit logarithmic data within the predetermined range in which a maximum value is set as 0.25 or less and a minimum value is set as minus 0.25 or more.
(7) The inference device according to any one of (1) to (6),
wherein the acquisition unit acquires the weight value in a convolutional neural network (CNN) as the neural network.
(8) An inference device comprising:

an acquisition unit that acquires a weight value in a neural network in which the weight value is stored in logarithm; and
an inference unit that performs inference regarding input data input to the neural network by performing an arithmetic operation on a logarithm acquired by the acquisition unit and the input data by using a shift circuit.

(9) An inference method comprising a computer:

acquiring a weight value in a neural network in which the weight value is stored in logarithm;
converting the weight value that has been acquired into an integer; and
performing inference regarding input data input to the neural network by arithmetic processing using the integer obtained by the converting.

(10) A computer-readable storage medium storing a inference program when executed causing a computer to function as:

an acquisition unit that acquires a weight value in a neural network in which the weight value is stored in logarithm;
a conversion unit that converts the weight value acquired by the acquisition unit into an integer; and
an inference unit that performs inference regarding input data input to the neural network by arithmetic processing using the integer obtained by conversion performed by the conversion unit.

Reference Signs List

1　INFERENCE SYSTEM

30　MODEL
100　INFERENCE DEVICE
110　COMMUNICATION UNIT
120　STORAGE UNIT
121　INPUT DATA STORAGE UNIT
122　MODEL STORAGE UNIT
130　CONTROL UNIT
131　ACQUISITION UNIT
132　CONVERSION UNIT
133　INFERENCE UNIT
134　OUTPUT UNIT
200　LEARNING SERVER
300　DETECTOR

**Claims**

1. An inference device comprising:

an acquisition unit that acquires a weight value in a neural network in which the weight value is stored in logarithm;
a conversion unit that converts the weight value acquired by the acquisition unit into an integer; and
an inference unit that performs inference regarding input data input to the neural network by arithmetic processing using the integer obtained by conversion performed by the conversion unit.

2. The inference device according to claim 1,
wherein the inference unit transfers input data to be input to the neural network to a temporary memory in parallel with processing of the conversion unit converting the weight value into the integer.

3. The inference device according to claim 1,

wherein the acquisition unit acquires 4-bit logarithmic data as the weight value, and
the conversion unit converts the 4-bit logarithmic data into 8-bit integer data by using a look up table.

4. The inference device according to claim 3,

wherein the acquisition unit acquires a weight value in the neural network within a predetermined range in which a maximum value and a minimum value are set, the weight value having been learned so as to approach a value expressed in 4-bit logarithmic data in the neural network, and
the conversion unit converts the weight value acquired by the acquisition unit into an integer.

5. The inference device according to claim 4,
wherein the acquisition unit acquires, as the weight value, 4-bit logarithmic data within the predetermined range in which a maximum value is set as one or less and a minimum value is set as minus one or more.

6. The inference device according to claim 4,
wherein the acquisition unit acquires, as the weight value, 4-bit logarithmic data within the predetermined range in which a maximum value is set as 0.25 or less and a minimum value is set as minus 0.25 or more.

7. The inference device according to claim 1,
wherein the acquisition unit acquires the weight value in a convolutional neural network (CNN) as the neural network.

8. An inference device comprising:

an acquisition unit that acquires a weight value in a neural network in which the weight value is stored in logarithm; and
an inference unit that performs inference regarding input data input to the neural network by performing an arithmetic operation on a logarithm acquired by the acquisition unit and the input data by using a shift circuit.

9. An inference method comprising a computer:

acquiring a weight value in a neural network in which the weight value is stored in logarithm;
converting the weight value that has been acquired into an integer; and
performing inference regarding input data input to the neural network by arithmetic processing using the integer obtained by the converting.

10. A computer-readable storage medium storing a inference program when executed causing a computer to function as:

an acquisition unit that acquires a weight value in a neural network in which the weight value is stored in logarithm;
a conversion unit that converts the weight value acquired by the acquisition unit into an integer; and
an inference unit that performs inference regarding input data input to the neural network by arithmetic processing using the integer obtained by conversion performed by the conversion unit.

# FIG.1

# FIG.2

Input

FILTER

Convolution + ReLU

Pooling

Convolution + ReLU

Pooling

Convolution + ReLU

Pooling

Convolution (PRODUCT-SUM + ReLU+Pooling OPERATION)

CONVERT TWO-DIMENSIONAL INPUT DATA INTO ONE-DIMENSIONAL DATA

Flatten Layer

Fully Connected (PRODUCT-SUM OPERATION)

10

Output

0.2 — Horse
0.7 — Zebra
0.1 — Dog

SoftMax Activation Function

# FIG.3

NUMBER OF INPUT CHANNELS

3ch

INPUT FEATURE MAP

CONVOLUTION FILTER

BIAS

BIAS

ACTIVATING FUNCTION

(POOLING PROCESSING)

ACT

Pol

BIAS

ACT

Pol

BIAS

ACT

Pol

NUMBER OF OUTPUT CHANNELS

OUTPUT FEATURE MAP

64ch

Conv

ReLU

pooling

12

EP 4 455 942 A1

# FIG.4

# FIG.5

# FIG.6

# FIG.7

42

| $w^q$ | QUANTIZATION BIT ALLOCATION |
|---|---|
| -1.0000 | 1000 |
| -0.5000 | 1001 |
| -0.2500 | 1010 |
| -0.1250 | 1011 |
| -0.0625 | 1100 |
| -0.0313 | 1101 |
| -0.0156 | 1110 |
| -0.0078 | 1111 |
| 0.0078 | 0111 |
| 0.0156 | 0110 |
| 0.0313 | 0101 |
| 0.0625 | 0100 |
| 0.1250 | 0011 |
| 0.2500 | 0010 |
| 0.5000 | 0001 |
| 1.0000 | 0000 |

44

EP 4 455 942 A1

# FIG.8

EP 4 455 942 A1

# FIG.9

EP 4 455 942 A1

# FIG.10

# FIG.11

# FIG.12

DETECTOR 300

310

321 IMAGING UNIT

320

322 IMAGING PROCESSING UNIT

323 OUTPUT CONTROL UNIT

324 OUTPUT I/F

325 IMAGING CONTROL UNIT

331 CPU

332 DSP

333 MEMORY

334 COMMUNICATION I/F

335 IMAGE COMPRESSION UNIT

336 INPUT I/F

330

311

313

312

EP 4 455 942 A1

# FIG.13

COMPUTER 1000

CPU 1100

RAM 1200

ROM 1300

1050

HDD 1400

PROGRAM DATA 1450

COMMUNICATION INTERFACE 1500

INPUT/OUTPUT INTERFACE 1600

1550

INPUT/OUTPUT DEVICE 1650

| | INTERNATIONAL SEARCH REPORT | International application No. |
| | | PCT/JP2022/045231 |

**A.    CLASSIFICATION OF SUBJECT MATTER**

*G06N 3/0495*(2023.01)i; *G06N 3/0464*(2023.01)i
FI:    G06N3/0495; G06N3/0464

According to International Patent Classification (IPC) or to both national classification and IPC

**B.    FIELDS SEARCHED**

Minimum documentation searched (classification system followed by classification symbols)

G06N3/02-3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2019-164793 A (SRI INTERNATIONAL) 26 September 2019 (2019-09-26) paragraphs [0019], [0102]-[0106], [0123], [0230]-[0234], fig. 1 | 1-10 |
| Y | JP 2021-510888 A (AMAZON TECH INC.) 30 April 2021 (2021-04-30) paragraphs [0075], [0076] | 1-10 |
| Y | JACOB, B et al., Quantization and Training of Neural Networks for Efficient Integer-Arithmetic-Only Inference, arXiv.org [online], 2017, pp. 1-14, [retrieved on 07 February 2023], Retrieved from the Internet: <URL: https://arxiv.org/abs/1712.05877v1>, <DOI: 10.48550/arXiv.1712.05877> chapters 2, 3 | 4-6 |
| A | MIYASHITA, D et al., Convolutional Neural Networks using Logarithmic Data Representation, arXiv.org [online], 2016, pp. 1-10, [retrieved on 07 February 2023], Retrieved from the Internet: <URL: https://arxiv.org/abs/1603.01025v2>, <DOI: 10.48550/arXiv.1603.01025> entire text, all drawings | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/045231**

| Patent document cited in search report | | | Publication date (day/month/year) | Patent family member(s) | Publication date (day/month/year) |
|---|---|---|---|---|---|
| JP | 2019-164793 | A | 26 September 2019 | US 2020/0134461 A1<br>paragraphs [0031], [0061],<br>[0065], [0097]-[0099], fig. 1<br>EP 3543917 A1<br>KR 10-2019-0110068 A | |
| JP | 2021-510888 | A | 30 April 2021 | US 2019/0294413 A1<br>paragraphs [0086], [0087] | |

Form PCT/ISA/210 (patent family annex) (January 2015)

**EP 4 455 942 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004398 A
- JP 2019164793 A
- JP 2019168084 A
- JP 2019168088 A